# EUROPÄISCHE PATENTSCHRIFT

(11) **EP 1 060 050 B1**
(45) Veröffentlichungstag und Bekanntmachung des Hinweises auf die Patenterteilung: **17.12.2003**
(21) Anmeldenummer: 99904674.1
(22) Anmeldetag: 26.02.1999
(51) Int. Cl.: B23K 26/00

(54) **VERFAHREN UND VORRICHTUNG FÜR DEN TRANSFER EINES HOHLPROFIL-ROHLINGS**
METHOD AND DEVICE FOR TRANSFERRING A HOLLOW-PROFILE BLANK
PROCEDE ET DISPOSITIF DE TRANSFERT D'UNE EBAUCHE A PROFILES CREUX

(30) Priorität: 03.03.1998 CH 50598
(43) Veröffentlichungstag der Anmeldung: 20.12.2000
(73) Patentinhaber: ELPATRONIC AG, 8962 Bergdietikon (CH)
(72) Erfinder: GYSI, Peter, CH-8454 Bellikon (CH)
(86) Internationale Anmeldenummer: CH9900088
(87) Internationale Veröffentlichungsnummer: WO99044783

(56) Entgegenhaltungen:
- EP-A- 0 672 496
- DE-U- 8 713 471
- US-A- 2 607 310
- US-A- 4 800 250
- US-A- 5 140 123

## Beschreibung

Die vorliegende Erfindung betrifft ein Verfahren und eine Vorrichtung für den Transfer von vorgeformten und zu verschweissenden Hohlprofilen gemäss Oberbegriff des Anspruchs 1 bzw. des Anspruchs 2.

US-A-4'800'250 zeigt eine derartige Vorrichtung. US-A-5'140'123 zeigt das Schweissen von Rohren mit einer Rolle als Nahtführung vor dem Schweissbereich.

Verfahren und Vorrichtungen zur Herstellung von verschweissten Rohren oder anderen Hohlprofilen sind dem Fachmann hinlänglich bekannt. Grundsätzlich wird bei all diesen Verfahren oder Vorrichtungen ein flaches Blech mittels einer Verformungsmaschine in eine gewünschte Profilform gebracht. Dabei kann das flache Blech von einer Rolle abgezogen werden und mittels eines kontinuierlichen Verformungsprozesses in ein kantiges oder rundes Hohlprofil gebracht werden. Bei anderen Verformungsmaschinen wird das flache Blech von einem Stapel abgezogen und schrittweise mit Hilfe von Verformungswerkzeugen in die gewünschte Profilform gebracht. Die derart vorgeformten Hohlprofile werden anschliessend einer Schweissmaschine zugeführt, um die von den stumpf aufeinander stossenden Blechkanten gebildete Fuge zu verschweissen.

Bei der Herstellung von Hohlprofilen, die für die Verwendung im Karrosseriebau geeignet sind, werden die verschweissten Profile einem weiteren Umformungsprozess unterzogen. Für diese Umformungsprozesse kommt heute vermehrt die Technik des Hydroformings zur Anwendung. Diese Umformungstechnik erlaubt es, die jeweiligen Profile in gewünschter Weise zu krümmen und/oder zu weiten, stellt jedoch erhöhte Anforderungen an die Qualität der Schweissnaht.

Schweissmaschinen, welche diese erhöhten Qualitätsanforderungen erfüllen, sind dem Fachmann ebenfalls bekannt und zeichnen sich unter anderem durch besondere Einrichtungen aus, mit denen die Fuge der vorgeformten Teile mit der erforderlichen Präzision stabilisiert und dem Laserschweissstrahl zugeführt wird.

Der Transfer der vorgeformten Hohlprofile in diese Präzisionshochleistungslaserschweissmaschinen erfolgt heute manuell. Einerseits kann damit den unterschiedlichen Bearbeitungsgeschwindigkeiten der jeweiligen Verformungsmaschine und der verwendeten Schweissmaschine Rechnung getragen werden und werden andererseits die von den Formwerkzeugen erzeugten Vibrationen von der Präzisionsschweissmaschine entkoppelt.

Es ist deshalb Aufgabe der vorliegenden Erfindung, eine automatisierte Übergabe von vorgeformten Hohlprofilrohlingen zwischen Hohlprofilwerkzeugmaschinen und Präzisionsschweissmaschinen zu schaffen, die es erlaubt, Vorformlinge zeitoptimiert, vibrationsfrei und mit der erforderlichen Genauigkeit in eine Präzisionshochleistungslaserschweissmaschine zu führen, um damit geschweisste Hohlprofile zu schaffen, die für die weitere Umformung zu Karrosserieteilen geeignet sind.

Diese Aufgabe wird durch ein Verfahren mit den Merkmalen des Anspruchs 1 gelöst.

Eine zur Durchführung des erfindungsgemässen Verfahrens geeignete Vorrichtung weist die Merkmale des Anspruchs 2 auf.

Weiterbildungen dieses Verfahrens und dieser Vorrichtung liegen im Bereich des fachmännischen Könnens und sind insbesondere in zusätzlichen Massnahmen für die Überwachung des Schweissprozesses und der Qualitätskontrolle der Schweissnaht zu sehen. Es versteht sich, dass die Schweissmaschine auch mit einem entlang der Fuge verfahrbaren Schweissstrahl versehen sein kann und anschliessend an den Schweissvorgang eine Nahtreinigung vorgesehen werden kann. Für dieses erfindungsgemässe Transferverfahren und dessen Transfervorrichtung können selbstverständlich Schweissmaschinen verwendet werden, an welche keine besonderen Anforderungen an die Präzision gestellt werden.

Im folgenden soll die Erfindung mit Hilfe der Figuren und anhand von Ausführungsbeispielen näher erläutert werden.
- Fig. 1: zeigt eine schematische Übersicht über den Verarbeitungsprozess zur Herstellung von Hohlprofilen;
- Fig. 2: zeigt eine erste Variante einer nicht erfindungsgemässen Transfervorrichtung mit einem Schweisswagen;
- Fig. 3: zeigt eine zweite Variante einer nicht erfindungsgemässen Transfervorrichtung mit einem Doppelshuttle;
- Fig. 4: zeigt eine dritte Variante einer erfindungsgemässen Transfervorrichtung mit einem Durchlaufsystem.

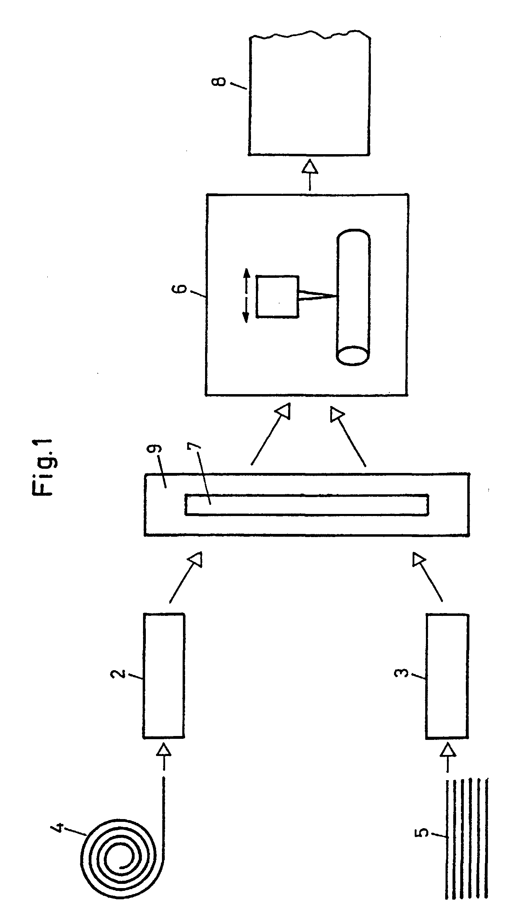

Der in Figur 1 schematisch dargestellte Herstellungsprozess für profilierte Rohre macht deutlich, dass für die Formung der Hohlprofile entweder kontinuierlich arbeitende Formwerkzeuge 2 oder schrittweise arbeitende Formwerkzeuge 3 verwendet werden. Bei den kontinuierlich arbeitenden Formwerkzeugen 2 wird das zu formende flache Blech direkt von einer Rolle 4 abgezogen, während bei den schrittweise arbeitenden Formwerkzeugen 3 die zu verarbeitenden flachen Bleche einem Stapel 5 entnommen werden. Solche Formwerkzeuge sind bekannt und verwenden die Technik des Gesenkbiegens, Gleitziehens oder Walzens. Damit können Hohlprofilrohlinge mit jeder gewünschten Form, d.h. rund, kantig oder profiliert, gebildet werden. Diese Hohlprofilrohlinge weisen eine in ihrer Längsrichtung verlaufende Fuge auf, welche in einem weiteren Herstellungsschritt verschweisst werden muss. Dazu werden die mit den Formwerkzeugen vorgeformten Hohlprofilrohlinge einer Schweissmaschine 6 zugeführt. Da die Bearbeitungsgeschwindigkeiten der jeweiligen Maschinen stark variieren wird zwischen den Formwerkzeugen 2 oder 3 und der Schweissmaschine 6 ein Zwischenlager 7 vorgesehen und werden die Rohlinge manuell der Schweissmaschine 6 zugeführt. Bekannte Schweissmaschinen, insbesondere zur Herstellung von Rohren, sind mit Mitteln ausgerüstet, um die zu schweissende Fuge durch die Schweissstelle zu führen. In weiteren Verarbeitungsschritten 8 werden die verschweissten Rohre in gewünschter Weise weiter umgeformt, d.h. gekrümmt, aufgeweitet, mit Beschichtungen versehen usw. Die in Figur 1 dargestellte Herstellungsschematik macht die Problemlösung der vorliegenden Erfindung deutlich. Das erfindungsgemässe Verfahren betrifft den zeitoptimierten, vibrationsfreien und justierbaren Transfer 9 und ist geeignet, mit kontinuierlich oder schrittweise arbeitenden Formwerkzeugen zusammen zu wirken.

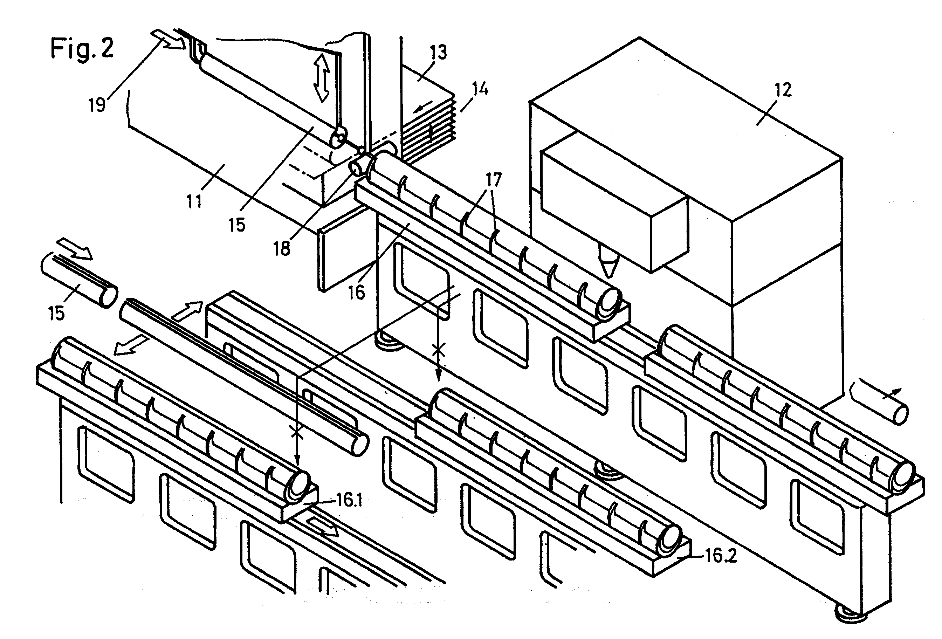

Eine erste nicht erfindungsgemässe Ausführungsform ist in Figur 2 gezeigt. Bei dieser Ausführungsform sind das Formwerkzeug 11 und die Schweissmaschine 12 voneinander getrennt, um die vom Formwerkzeug 11 erzeugten Vibrationen nicht auf die Schweissmaschine 12 zu übertragen. In diesem Ausführungsbeispiel werden die zu verformenden flachen Bleche 13 von einem Stapel 14 abgezogen und in bekannter Weise mit dem Formwerkzeug 11 zu einem Rohr 15 gebogen. Der derart vorgeformte Rohr-Rohling wird maschinell ausgestossen 19 und über Rollen 18 auf einen Schweisswagen 16 geladen. In einer Ausführungsform dieses Ausführungsbeispiels sind zwei alternierend hin- und herlaufende Schweisswagen 16.1, 16.2 vorgesehen und wird der Schweissstrahl X alternierend über den einen oder anderen Schweisswagen gelenkt. Der Schweisswagen 16 weist eine Vielzahl von Klauen 17 auf, mit denen der Rohling gefasst, ausgerichtet und lokal zusammengepresst werden kann. Solche Schweisswagen eignen sich besonders für die Bearbeitung von Rohlingen mit einem Durchmesser von 50 bis 250 mm. Die Dicke der zu bearbeitenden Bleche variiert dabei zwischen 0.5 und 3 mm.

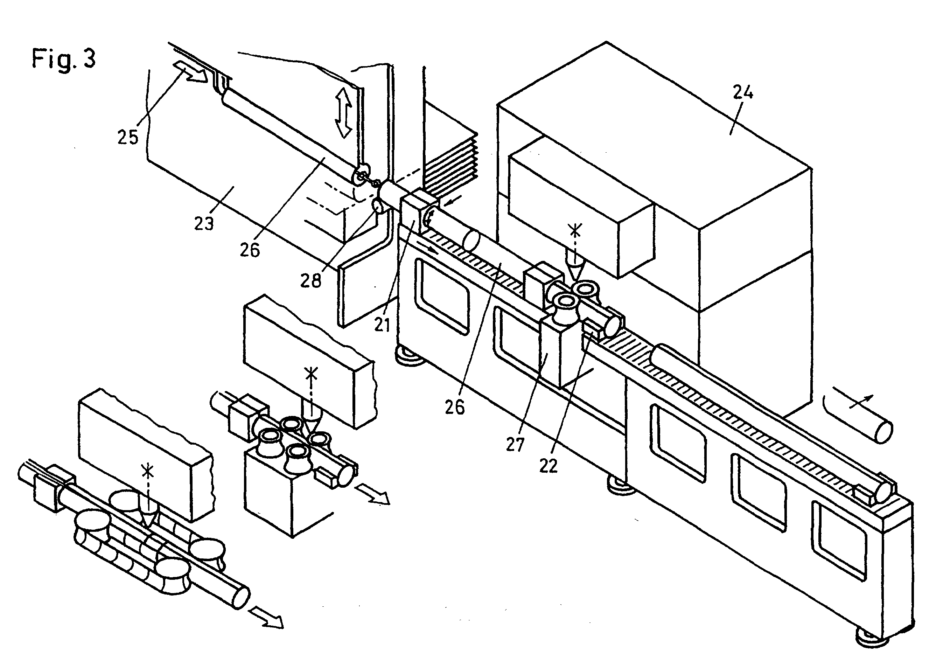

Die in Figur 3 dargestellte nicht erfindungsgemässe Transfervorrichtung weist einen Ladeshuttle 21 und einen Entladeshuttle 22 auf. Wiederum sind das Formwerkzeug 23 und die Schweissmaschine 24 voneinander getrennt, um die Übertragung der Vibrationen des Formwerkzeugs 23 zu verhindern. Eine Ausstossvorrichtung 25 des Formwerkzeugs 23 führt den vorgeformten Rohling 26 über Rollen 28 dem Ladeshuttle 21 zu, welcher die Fuge in einer ersten Näherung derart ausrichtet, dass diese mit der Schweissstelle fluchtet. Dazu ist der Shuttle derart eingerichtet, dass dieser den Rohling 26 um seine Längsachse drehen kann und ihn horizontal und/oder vertikal verschieben kann. Dieser Ladeshuttle 21 führt den derart ausgerichteten (justierten) Rohling 26 zum Schweissstrahl X der Schweissmaschine 24. Im Bereich der Schweissstelle ist eine weitere Klemmvorrichtung 27 vorgesehen, welche die Fuge in gewünschter Weise stabilisiert und zusammenpresst. Insbesondere sorgt diese Klemmvorrichtung 27 dafür, dass die zu schweissende Nut exakt durch die Schweissstelle geführt wird. Der Entladeshuttle 22 dient der Entnahme des geschweissten Rohlings 26 aus der Schweissmaschine 24 und wirkt in geeigneter Weise mit dem Ladeshuttle 21 zusammen. Insbesondere kann der Ladeshuttle 21 den in der Zwischenzeit von dem Formwerkzeug 23 bereitgestellten Rohling fassen, während der in der Schweissmaschine 24 liegende Rohling vom Entladeshuttle 22 durch die Schweissmaschine gezogen wird. Damit kann die Schweissmaschine 24 ohne wesentliche Unterbrechungen betrieben werden. Auch bei dieser Anordnung ist der Transfer zwischen dem formenden Werkzeug 23 und der Schweissmaschine 24 vibrationsfrei und wird eine justierbare Förderung realisiert.

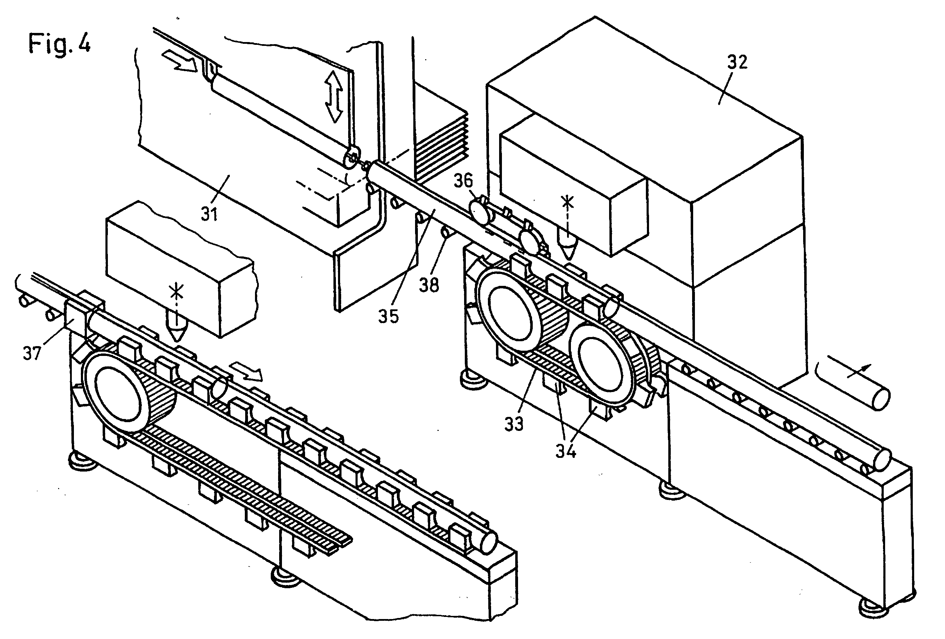

Bei der in Figur 4 gezeigten erfindungsgemässen Anordnung wird der Transfer zwischen dem Formwerkzeug 31 und der Schweissmaschine 32 mit Hilfe von Förderraupen 33 vorgenommen. Diese Förderraupen 33 sind mit paarweise angeordneten Spannbacken 34 bestückt, in welche die aus dem Formwerkzeug 31 geförderten Rohlinge 35 eingeschoben werden. Durch geeignete Ausgestaltung der Spannbacken 34 oder Neigung der einzelnen Raupen üben die Spannbacken 34 eine entsprechende Klemmkraft auf den Rohling 35 aus. Die erforderliche Ausrichtung der zu schweissenden Fuge für deren Bearbeitung in der Schweissstelle kann durch eine mitlaufende Zentrierraupe 36 und/oder einen geeigneten Ladeshuttle 37 erfolgen. Es versteht sich, dass dieses Transfersystem geeignet ist, um Rohlinge sowohl aus einem kontinuierlich arbeitenden Formwerkzeug als auch aus einem schrittweise arbeitenden Formwerkzeug zu transferieren. In jedem Fall werden die aus dem Formwerkzeug ausgestossenen Rohlinge über Transportrollen 38 den Spannbacken 34 der Förderraupen 33 zugeführt.

Es versteht sich, dass die Ausstossvorrichtungen der Formwerkzeuge mit den Transfervorrichtungen zeitlich miteinander abgestimmt sein können. Insbesondere kann die Schweissmaschine im Duplexbetrieb gefahren werden, d.h. können mehrere Transfervorrichtungen parallel zueinander angeordnet sein, welche alternierend mit dem Schweissstrahl der Schweissmaschine zusammenwirken. Der in der Schweissmaschine verwendeten Hochleistungslaser richtet sich nach dem Material des zu bearbeitenden Rohlings.

## Patentansprüche

1. Verfahren für den Transfer eines in einem Formwerkzeug (31) vorgeformten Hohlprofil-Rohlings (35) mit einer zu verschweissenden Fuge zur Schweissstelle einer für die Herstellung von im Automobilbau verwendbaren Hohlprofilen geeigneten Schweissmaschine (32), wobei
der Rohling (35) von einer zum Entladen des Formwerkzeugs und zur Beschickung der Schweissmaschine ausgestalteten Transfervorrichtung (33, 34, 36, 38) gegriffen wird,
die Fuge des Rohlings mit Hilfe der Transfervorrichtung derart ausgerichtet wird, dass diese Fuge mit der Schweissstelle der Schweissmaschine fluchtet,
die Ränder der Fuge in gewünschter Weise positioniert werden, und
die positionierten Fugenränder mindestens im Bereich der Schweissstelle gegeneinander gepresst werden, **dadurch gekennzeichnet, dass** die Transfervorrichtung den Hohlprofil-Rohling (35) über Rollen (38) an eine Förderraupe (33) der Transfervorrichtung abgibt, die mit mehreren paarweise angeordneten Spannbacken (34) versehen ist, und wobei die Ausrichtung durch eine oberhalb der Förderraupe vor der Schweissstelle angeordnete, mit dem Hohlprofil-Rohling mitlaufende Zentrierraupe (36) erfolgt, und/oder wobei die Ausrichtung durch einen zwischen den Rollen (38) und der Förderraupe (33) angeordneten Ladeshuttle (37) erfolgt

2. Transfervorrichtung für den Transfer eines in einem Formwerkzeug (31) vorgeformten Hohlprofil-Rohlings (35) mit einer zu verschweissenden Fuge zur Schweissstelle einer für die Herstellung von im Automobilbau verwendbaren Hohlpröfilen geeigneten Schweissmaschine (32), wobei
die Transfervorrichtung Mittel (33, 34) zum Greifen des vorgeformten Hohlprofil-Rohlings aufweist, welche zur Entladung des Hohlprofil-Rohlings aus dem Formwerkzeug und zur Beschickung der Schweissmaschine mit dem Hohlprofil-Rohling ausgestaltet sind, sie weiter Mittel (36; 37) zum Ausrichten der Fuge des Rohlings derart aufweist, dass diese Fuge mit der Schweissstelle der Schweissmaschine fluchtet, sie weiter Mittel (36; 37) aufweist, um die Fugenränder in gewünschter Weise zu positionieren, und
sie Mittel (34) aufweist, um die positionierten Fugenränder mindestens im Bereich der Schweissstelle gegeneinander zu pressen, **dadurch gekennzeichnet, dass** die Mittel zum Greifen eine Förderraupe (33) umfassen, die mit mehreren Spannbacken (34) versehen ist und Rollen (38), die den Hohlkörper-Rohling den Spannbacken zuführen, dass die Mittel zum Ausrichten von einer Zentrierraupe (36) gebildet sind, die vor der Schweissstelle oberhalb der Förderraupe (33) angeordnet und zum Mitlaufen mit dem Hohlkörper-Rohling ausgestaltet ist, und/oder dass die Mittel zum Ausrichten von einem Ladeshuttle (37) gebildet sind, das zwischen den Rollen (38) und der Förderraupe (33) angeordnet ist.

## Claims

1. Method for the transfer of a hollow-section blank (35) preformed in a forming tool (31) and with a joint for welding, to the welding point of a welding machine (32) suitable for the fabrication of hollow sections usable in motor vehicle construction, wherein
the blank (35) is seized by a transfer apparatus (33, 34, 36, 38) configured to unload the forming tool and to load the welding machine,
the joint in the blank is aligned by means of the transfer apparatus so that the joint is in line with the welding point of the welding machine,
the edges of the joint are positioned as desired, and
the positioned joint-edges are pressed against each other at least in the region of the welding point,
**characterized in that** the transfer apparatus feeds the hollow-section blank (35) over rollers (38) to a caterpillar conveyor (33) of the transfer apparatus which is provided with a plurality of clamping jaws (34) arranged in pairs, and wherein the alignment is effected by a centring caterpillar (36) arranged above the caterpillar conveyor before the welding point and travelling with the hollow-section blank, and/or wherein the alignment is effected by a loading shuttle (37) arranged between the rollers (38) and the caterpillar conveyor (33)

2. Transfer apparatus for the transfer of a hollow-section blank (35) preformed in a forming tool (31) and with a joint for welding, to the welding point of a welding machine (32) suitable for the fabrication of hollow sections usable in motor vehicle construction, wherein
the transfer apparatus has means (33, 34) for seizing the preformed hollow-section blank, which means are configured to unload the hollow-section blank from the forming tool and to load the hollow-section blank into the welding machine, also has means (36; 37) for aligning the joint in the blank so that the joint is in line with the welding point of the welding machine, also has means (36; 37) for positioning the edges of the joint as desired, and
has means (34) for pressing the positioned joint-edges together at least in the region of the welding point, **characterized in that** the means for seizing comprise a caterpillar conveyor (33) which is provided with a plurality of clamping jaws (34) and rollers (38) which feed the hollow-section blank to the clamping jaws, **in that** the means for aligning are formed by a centring caterpillar (36) which is arranged before the welding point above the caterpillar conveyor (33) and is configured to travel with the hollow-section blank, and/or **in that** the means for aligning are formed by a loading shuttle (37) which is arranged between the rollers (38) and the caterpillar conveyor (33).

## Revendications

1. Procédé pour le transfert d'une ébauche à profilé creux (35) préformée dans un outil de formage (31) avec un joint à souder au point de soudage d'une machine de soudage (32) appropriée pour la fabrication de profilés creux utilisables dans la construction automobile, moyennant quoi
l'ébauche (35) est saisie par un dispositif de transfert (33, 34, 36, 38) conçu pour le déchargement de l'outil de formage et pour l'alimentation de la machine de soudage,
le joint de l'ébauche est orienté à l'aide du dispositif de transfert de telle sorte que ce joint est aligné avec le point de soudage de la machine de soudage,
les bords du joint sont positionnés de la façon souhaitée, et
les bords du joint positionnés sont comprimés l'un contre l'autre au moins dans la zone du point de soudage, **caractérisé en ce que** le dispositif de transfert envoie l'ébauche à profilé creux (35) au moyen de rouleaux (38) à une chenille de transport (33) du dispositif de transfert, qui est pourvue de plusieurs mâchoires de serrage (34) disposées par paires, et moyennant quoi l'alignement s'effectue par une chenille de centrage (36) disposée au-dessus de la chenille de transport avant le point de soudage et tournant avec l'ébauche à profilé creux, et/ou moyennant quoi l'orientation s'effectue par une navette de chargement (37) disposée entre les rouleaux (38) et la chenille de transport (33).

2. Dispositif de transfert pour le transfert d'une ébauche à profilé creux (35) préformée dans un outil de formage (31) avec un joint à souder au point de soudage d'une machine de soudage (32) appropriée pour la fabrication de profilés creux utilisés dans la construction automobile, moyennant quoi
le dispositif de transfert présente des moyens (33, 34) pour la saisie de l'ébauche à profilé creux préformée qui sont conçus pour le déchargement de formage à profilé creux de l'outil de moulage et pour l'alimentation de la machine de soudage avec l'ébauche à profilés creux, il présente en outre des moyens (36 ; 37) pour l'alignement du joint de l'ébauche de telle sorte que ce joint est aligné avec le point de soudage de la machine de soudage, il présente également des moyens (36 ; 37) pour positionner les bords du joint de façon appropriée et
il présente des moyens (34) pour presser les bords de joint positionnés au moins dans la zone du point de soudage les uns contre les autres, **caractérisé en ce que** les moyens pour la préhension comprennent une chenille de transport (33) qui est pourvue de plusieurs mâchoires de serrage (34) et des rouleaux (38) qui amènent l'ébauche à corps creux aux mâchoires de serrage, **en ce que** les moyens pour l'alignement sont formés d'une chenille de centrage (36) qui est disposée avant le point de soudage au-dessus de la chenille de transport (33) et est conçue pour la rotation simultanée avec l'ébauche à corps creux, et/ou **en ce que** les moyens pour l'alignement sont formés d'une navette de chargement (37) qui est disposée entre les rouleaux (38) et la chenille de transport (33).
